# EUROPEAN PATENT APPLICATION

(11) **EP 2 113 845 A1**
(43) Date of publication of application: **04.11.2009**
(21) Application number: 08008302.5
(22) Date of filing: 30.04.2008
(51) Int. Cl.: G06F 17/22

(54) **Character conversion method and apparatus**

(71) Applicant: Altaqnia, Afkar, Riyadh 11372 (SA)
(72) Inventor: Al-Juriad, Nassir, Riyadh 11372 (SA)
(74) Representative: Appelt, Christian W.

(57) **Abstract**

A Conversion Method and Apparatus for the processing of encoded information reduces the message size and resources by mapping a first word with characters from a sub-set of a first alphabet for which a first processing protocol requires an n-bit encoding to a second word with characters from a second alphabet for which a second processing protocol requires an m-bit encoding, where m is smaller than n.

## Description

The invention relates to a method and an apparatus for the conversion of characters from one alphabet to another when processing encoded information by means of a processing protocol requiring an encoding with a restricted character set.

In digital data processing systems, such as computing devices or information transfer, broadcasting, receiving or storing devices, information is represented in machine-readable format by sequences of bits, i.e. zeros and ones. When such devices are employed to process messages generated by an analogue device or an operator or user, these messages need to be converted into digital computer-readable format before being input into the device. Likewise, any output of a computerized information processing operation will generally exist in digital form, and needs to be reconverted to a message or result meaningful to the operator or user. Moreover, digital computing and information processing systems and equipment are now produced and sold in large numbers by scores of manufacturers worldwide, but should nevertheless be compatible among one another and should be adapted to being used by people of all different nationalities and languages.

Hence, standards have been developed for the conversion of human languages into computer-readable digital format in order to allow computers and other information processing devices to consistently represent and manipulate text expressed in different writing systems.

For example, the Unicode Transformation Format (UTF) is an industry standard that consists of several different schemes for the conversion of characters into 1 to 4 bytes, and is widely used throughout the computing world in nearly all devices for the processing and storing of information as well as in mobile communication systems. Like all character encodings, the Unicode standard specifies a correspondence between character symbols forming part of a writing system and digital bit patterns, and includes a set of code charts, an encoding methodology, and rules for text normalization and collation.

According to Unicode's UTF-8 encoding scheme, the letters of the Latin alphabet and other ASCII symbols are usually represented by a single byte, i.e. 8 bits. Characters from languages with other alphabets are usually encoded in either 2-, 3- or even 4-byte Unicode formats. For example, UTF-32 employs 32 bits, i.e. 4 bytes, to encode any given character and is capable of representing any symbol from almost any human language plus an abundance of special characters, for instance symbols used in mathematics or other specialized fields. While Unicode's UTF-16 or UTF-32 formats allow the user to choose from a very large character set, this necessarily entails that more physical storage space or transmission bandwidth is required to store or transfer any one character, and may sometimes lead to undesirable limitations.

For instance, according to the Short Message Service (SMS) communications protocol for the interchange of text messages between mobile telephone devices, the Latin letters and other ASCII characters are usually represented according to the UTF-8 scheme or UTF-7 scheme, requiring 8 bits or 7 bits, respectively, to represent any one character, whereas characters from other languages such as Arabic, Urdu or Hebrew are represented according to the UTF-16 scheme, requiring 16 bits per character. As a consequence, the maximum message size supported by the SMS protocol for any of the latter languages is currently 70 16-bit characters, while it is 160 7-bit characters or 140 8-bit characters for languages using the Latin alphabet, such as English, French or German.

A similar problem is encountered when messages in Arabic, Urdu, Hebrew or other languages with non-Latin writing systems need to be stored in physical storage devices, such as the cache or main memory of a computer device.

The reduction in message size or the increase in memory resources encountered when transferring and/or storing messages in languages with non-Latin alphabets is often undesirable, and several solutions have been proposed to remedy this problem. For example, many providers of mobile communication services offer their clients the option to concatenate text messages. This means that a text message exceeding the maximum text length is automatically broken up into several smaller messages, which conform to the limit in text size and are then sent separately to the receiver by means of the standard SMS protocol. At the receiving end, the separate messages are combined to reproduce the original message. In order to guarantee that individual messages are appropriately combined, each such message will usually start with a User Data Header (UDH), containing the necessary segmentation information. However, since the UDH is incorporated into the payload, the number of characters per message is further reduced. Moreover, the multiple individual messages require multiple transmission bandwidth and/or storage capacity, and the user is often charged accordingly.

As an alternative solution, dedicated compression and decompression algorithms have been incorporated into the UTF standard. While these algorithms make better use of the available bandwidth and/or storage capacity by processing messages in compressed format, thereby permitting larger messages sizes, an efficient compression itself requires considerable time and computing resources, partially obliterating the benefits of an increased text volume.

Hence, what is needed is a simple and yet effective technique for making better use of the available storage and/or transmission resources, especially when processing information in languages using non-Latin characters.

This objective is achieved by providing a conversion method and apparatus for the transfer or storage of encoded information according to claim 1, claim 6, claim 11 and claim 14, respectively.

The present invention relies on the realization that few users ever make full use of the abundance of characters provided by UTF-16 or UTF-32 encoding. For example, most users composing messages designated for digital processing in languages such as Arabic, Urdu or Hebrew usually employ but a very limited set of characters among all those offered by UTF-16 or UTF-32 encoding. Hence, it becomes possible to select and designate a limited set of characters, which comprises all those of interest to the average user, and map them to a corresponding set of characters admissible under UTF-8 or UTF-7 by means of a one-to-one mapping. The message can then be processed in UTF-8 or UTF-7 format, and can be reconstructed at the receiving station by means of the inverse mapping of the one-to-one mapping. By means of the invention, a message that would usually require 16 or 32 bits for encoding any given character can be processed and manipulated according to the standard UTF-8 format, thus saving precious processing resources and effectively reducing the cost and processing effort encountered when processing messages in languages with non-Latin writing systems.

In general terms, the present invention relates to a conversion method for the processing of encoded information, such as transfer or storage, by means of a processing protocol requiring an encoding with a restricted character set, comprising the step of mapping a first word with characters from a subset of a first alphabet for which a first transfer or storage protocol requires an n-bit encoding to a second word with characters from a subset of a second alphabet for which a second transfer or storage protocol requires an m-bit encoding by means of a bijective mapping, wherein m is smaller than n. The invention also relates to a corresponding mapping unit, which performs the bijective mapping at a first station, such as the sender station of a mobile communication link.

The invention may also comprise the step of identifying and selecting a suitable subset of the first alphabet and providing the bijective mapping that maps words with characters from the chosen subset to corresponding words with characters from a subset of the second alphabet. For instance, the selected subset of the first alphabet may contain some or all of the most frequently used characters in that alphabet. The step of selecting suitable subsets and a corresponding bijective mapping between words with characters from the subset of the first alphabet and words with characters from the subset of the second alphabet can be performed as part of the initialization, and does not need to be repeated during operation.

The invention may also comprise provisions for the case in which a user tries to input a word with characters that do not fall into the selected subset of characters. In this case, the inventive method and apparatus may generate an error message, asking the user to choose only among the selected characters. Or the conversion method may automatically revert to a transmission and/or storage of the input according to the first transfer or storage protocol, with our without notifying the user.

The invention may further comprise the step of sending and/or storing the second word according to the second transfer or storage protocol. In this case, the invention also relates to a corresponding processing unit, which is connected to the mapping unit and configured to receive the second word from the mapping unit and is further configured to transfer and/or store the second word according to the second transfer or storage protocol. An example for such a processing unit can be a mobile telephone device in a mobile communication network, which sends the second word mapped in accordance to the bijective mapping to a relay, switching station or receiving station.

The second word may also be compressed before the transfer and/or storage to further enhance the communication or transfer rate. In this case, the conversion apparatus may further comprise a compression unit connected between the mapping unit and the processing unit, which is configured to compress the second word prior to transfer or storage. The compression method can be any known compression method, such as Huffman coding, Lempel-Ziv coding, or any coding technique based thereupon, or any other known coding technique.

The invention has the additional benefit that it allows for the transfer and/or storage of third words from a third alphabet alongside the second word. In particular, the third alphabet can coincide with the second alphabet, and words from the first alphabet can then be sent concurrently or interchangeably with words from the second alphabet. For example, when employed in a mobile communication link, the invention can be used to send text messages containing words from both Arabic and English. The Arabic characters can be converted to Latin characters by means of the mapping according to the invention, and can be transferred alongside the Latin characters originally present in the text message. In this case, the third word can be separated from the second word by means of a designated character or signal, allowing an unambiguous reconstruction of both the first word and the third word at the receiving station. For example, when sending SMS text messages the designated character or signal may be a spacing character used to separate the third word in Latin characters from the second word converted into Latin characters from Arabic characters. At a receiving station, the spacer character allows to separate the second word, which needs to be reconverted into the first word by means of the inverse of the bijective mapping, from the third word, which does not require any reconversion. As such, when employed to send text messages in a mobile telecommunications link, the invention provides a simple means for enhancing the text size of messages containing both words with Latin as well as words with non-Latin characters.

The invention is not only directed at the conversion of a first word into a second word by means of a bijective mapping, but also at the complementary step of reconstructing a first word with characters from a subset of a first alphabet for which a first transfer or storage protocol requires an n-bit encoding from a second word with characters from a subset of a second alphabet for which a second transfer or storage protocol requires an m-bit encoding by means of the inverse mapping of a bijective mapping, wherein m is smaller than n. The invention is likewise directed at a corresponding reconstruction unit, which is configured to reconstruct the first word from the second word. Such a reconstruction unit can be part of a mobile telephone device in a wireless communication link, which serves to reconstruct the first word from the second word, for example an Arabic word from a word in Latin characters encoded at another mobile telephone device according to the method of the present invention.

In addition, the invention is directed at receiving and/or retrieving the second word according to the second transfer or storage protocol before the reconstruction of the first word. The invention can then also relate to a corresponding processing unit, which is connected to the reconstruction unit and configured to transfer and/or store the second word according to the second transfer or storage protocol.

Moreover, the second word can be decompressed before the reconstruction of the first word. The corresponding conversion apparatus can then comprise a decompression unit connected to the reconstruction unit, which is configured to decompress the second word following the transfer or storage. As explained above, by combining the conversion method of the present invention with a compression/decompression scheme, the transfer and/or storage rate can be further enhanced.

The invention is effective in reducing the processing effort whenever characters from a suitable subset of a large alphabet are to be processed by an information processing device. In this broad context, the processing of information can be any of information storage, transfer, broadcasting or the like, and the information processing device can be any computing, storage or information transfer device such as a mobile telephone device or the like. The first alphabet, the second alphabet and the third alphabet can be any sets consisting of a finite number of characters. The characters can be any symbols useful for representing information, including but not limited to Latin or Arabic letters, numbers, ASCII symbols or the like. The first, second and third word can be any finite-length sequence of characters from the first, second and third alphabet, respectively. In particular, the first, second and/or third word can be one-character-words, i.e., characters themselves. Hence, the first and second transfer or storage protocol can be protocols that process information word-by-word, or character-by-character, or in a mixed way.

A particular benefit of the invention lies in that it can easily be combined with all standard information processing protocols, without any need to develop new or extended standards for specific languages using non-Latin alphabets, and can also be combined with all standard techniques for further enhancing the communication or transfer rate, such as data compression schemes.

When using computing or digital information processing devices to process information, signals are often distorted due to detrimental noise effects. It will then in general be necessary to employ error detection and/or error correction techniques and methods so that distorted signals can be faithfully recovered. A benefit of the present invention lies in that it can easily be combined with such error correction and error detection techniques and apparatuses. For instance, in the context of the present invention the second word can be encoded by means of an error correction encoding method prior to being sent or stored according to the second transfer or storage protocol, and the second word can be decoded by means of a corresponding decoding algorithm before being reconverted into the first word. In this way, the invention can be employed to process information also in case of lossy communication or storage. In fact, the necessary encoding and decoding devices can be incorporated into the processing unit and reconstruction unit, respectively. Moreover, any compression and decompression units can likewise be incorporated into the processing unit and reconstruction unit, respectively.

The present invention is best understood from the exemplary embodiments, which are described below with reference to the following figures.
Fig. 1 shows a flow diagram illustrating the method of the present invention when employed for text messaging in a mobile communication link; and
Fig. 2 shows a flow diagram illustrating the method of the present invention when employed to the compression of Unicode text files.

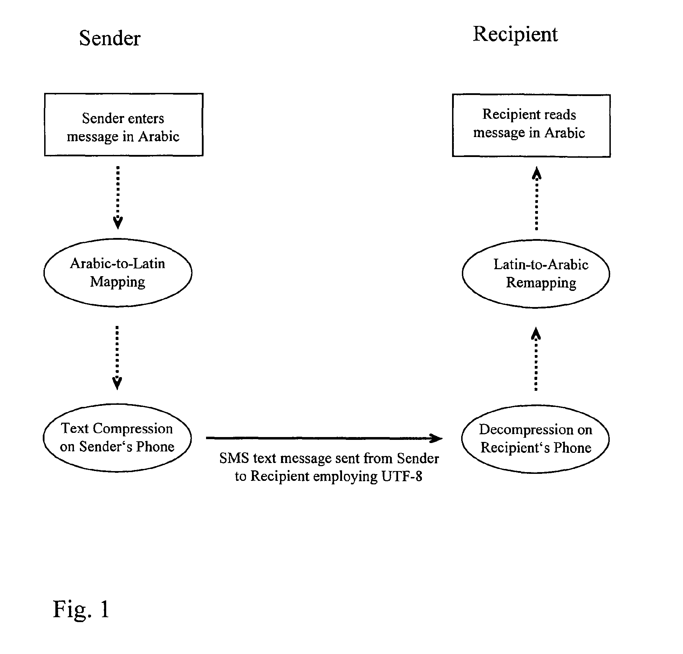

With reference to Fig. 1, the method of the present invention will be described in the context of text messaging in mobile communication links. By way of example, the present invention can be applied in a first mobile phone, i.e., the sender, and a second mobile phone, i.e., the recipient, and can be used to send messages with characters from the Arabic alphabet from the sender to the recipient by means of conversion into Latin characters and subsequent reconversion into Arabic characters.

The sender chooses a message and inputs the chosen message in Arabic into his telephone device. According to a conventional text messaging protocol such as SMS, these characters would now be encoded using UTF-16. Hence, every single Arabic character would usually be encoded into a sequence of 16 bits, which would then be transferred to the recipient in digital form over a wireless communication link. At the recipient station, the signals would be reconverted into Arabic characters by means of the UTF-16 conversion table, and the recipient would hence be able to read the message in Arabic sent out by the sender.

However, the Arabic alphabet contains only 42 different characters, which can easily be mapped to a subset of the lower case and upper case Latin characters in a one-to-one fashion, so that each Arabic character corresponds uniquely to either a lower case or an upper case Latin character. An example for such a mapping is shown in the following table, which lists Arabic characters alongside their decimal and hexagonal representation, their name, and the lower case or upper case Latin character to which they are mapped. Such a table represents a bijective mapping.

**TABLE 1**

| **Character** | **Decimal** | **Hex** | **Mapped to** | **Name** |
|---|---|---|---|---|
| 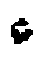 | 1569 | 0621 | a | ARABIC LETTER HAMZA |
| 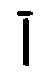 | 1570 | 0622 | l | ARABIC LETTER ALEF WITH MADDA ABOVE |
| 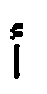 | 1571 | 0623 | k | ARABIC LETTER ALEF WITH HAMZA ABOVE |
| 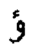 | 1572 | 0624 | n | ARABIC LETTER WAW WITH HAMZA ABOVE |
| 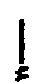 | 1573 | 0625 | i | ARABIC LETTER ALEF WITH HAMZA BELOW |
| 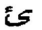 | 1574 | 0626 | e | ARABIC LETTER YEH WITH HAMZA ABOVE |
| 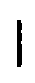 | 1575 | 0627 | A | ARABIC LETTER ALEF |
| 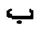 | 1576 | 0628 | B | ARABIC LETTER BEH |
| 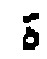 | 1577 | 0629 | c | ARABIC LETTER TEH MARBUTA |
| 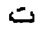 | 1578 | 062A | C | ARABIC LETTER TEH |
| 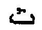 | 1579 | 062B | f | ARABIC LETTER THEH |
| 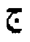 | 1580 | 062C | D | ARABIC LETTER JEEM |
| 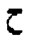 | 1581 | 062D | E | ARABIC LETTER HAH |
| 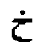 | 1582 | 062E | F | ARABIC LETTER KHAH |
| 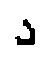 | 1583 | 062F | G | ARABIC LETTER DAL |
| 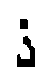 | 1584 | 0630 | H | ARABIC LETTER THAL |
| 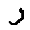 | 1585 | 0631 | I | ARABIC LETTER REH |
| 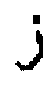 | 1586 | 0632 | J | ARABIC LETTER ZAIN |
| 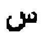 | 1587 | 0633 | K | ARABIC LETTER SEEN |
| 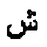 | 1588 | 0634 | L | ARABIC LETTER SHEEN |
| 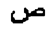 | 1589 | 0635 | M | ARABIC LETTER SAD |
| 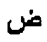 | 1590 | 0636 | N | ARABIC LETTER DAD |
| 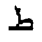 | 1591 | 0637 | O | ARABIC LETTER TAH |
| 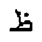 | 1592 | 0638 | P | ARABIC LETTER ZAH |
| 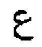 | 1593 | 0639 | Q | ARABIC LETTER AIN |
| 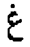 | 1594 | 063A | R | ARABIC LETTER GHAIN |
| 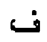 | 1601 | 0641 | S | ARABIC LETTER FEH |
| 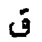 | 1602 | 0642 | T | ARABIC LETTER QAF |
| 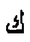 | 1603 | 0643 | U | ARABIC LETTER KAF |
| 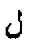 | 1604 | 0644 | V | ARABIC LETTER LAM |
| 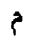 | 1605 | 0645 | W | ARABIC LETTER MEEM |
| 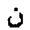 | 1606 | 0646 | X | ARABIC LETTER NOON |
| 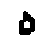 | 1607 | 0647 | g | ARABIC LETTER HEH |
| 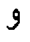 | 1608 | 0648 | Y | ARABIC LETTER WAW |
| 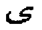 | 1609 | 0649 | b | ARABIC LETTER ALEF MAKSURA |
| 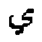 | 1610 | 064A | Z | ARABIC LETTER YEH |
| 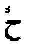 | 1611 | 064B | q | FATHATAN combined with hah 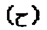 |
| 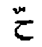 | 1612 | 064C | o | DAMMATAN combined with hah 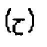 |
| 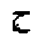 | 1613 | 064D | t | KASRATAN combined with hah 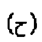 |
| 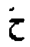 | 1614 | 064E | r | FATHA combined with hah 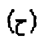 |
| 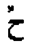 | 1615 | 064F | p | DAMMA combined with hah 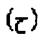 |
| 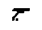 | 1616 | 0650 | s | KASRA combined with hah 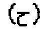 |

Of course, Table 1 merely represents one example of the possible character mapping. For instance, all permutations of the mapping of Table 1 work equally well. Similar conversion tables can be generated for other languages with non-Latin writing systems, such as Hebrew or Urdu.

According to the present invention, any Arabic character entered at the sender station is mapped to the corresponding Latin character. Provisions can be made for the case in which a user tries to enter a character which would be allowed under UTF-16, but is not among the list of characters of the chosen subset. In this case, the mapping unit may output an error symbol, asking the user to choose only among the permitted characters. Alternatively, the conversion method may automatically revert to standard UTF-16 encoding in this particular case. Hence, transmission bandwidth or storage capacity could still be saved in most cases without causing any inconvenience to the user by unduly restricting the set of available characters.

After the bijective mapping has been applied to the input, the Arabic message is represented by a sequence of Latin characters which are now sent to the recipient according to the UTF-8 protocol or UTF-7 protocol. At the recipient station, the Latin characters are reconverted into Arabic characters by means of the same mapping table, and the original message is hence restored. This message is then displayed to the recipient, who may read the message in Arabic on the display of his mobile phone. In this way, a text message with 140 Arabic characters or 160 Arabic characters can be sent from the sender to the recipient, instead of only 70 16-bit Arabic characters, which would be the limit according to standard SMS protocols. Hence, in the context of text messaging for mobile phones, the invention results in roughly doubling the maximum permissible message length for Arabic texts.

Moreover, as illustrated in Fig. 1, the text size may be further enhanced by employing compression and decompression techniques at the sender station and recipient station, respectively. For example, after the conversion of the Arabic characters into Latin characters according to Table 1, the converted message can be compressed by means of a designated compression software at the sender's mobile phone. The compressed message is then sent to the recipient station, where it is decompressed by means of a decompression algorithm on the recipient's mobile phone before being reconverted into Arabic characters by means of the inverse of the bijective mapping of Table 1. The compression and decompression software can employ any standard compression algorithm, such as Huffmann coding, Lempel-Ziv coding, any of their derivatives, or any other compression algorithm currently in use or still to be developed.

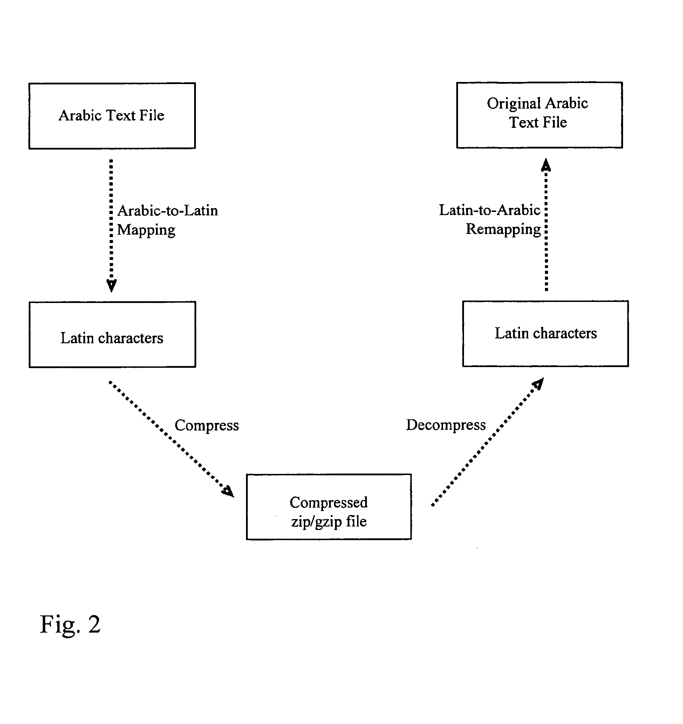

The method and apparatus of the present invention can likewise be employed to reduce the size of text files when storing digital data on a storage device such as a hard disk drive of a computer, a DVD, or a flash storage device. Fig. 2 illustrates an exemplary embodiment, again for the case in which the first alphabet is the Arabic alphabet and the second alphabet is the English or Latin alphabet.

When storing a text file containing words with Arabic characters, according to the UTF-16 protocol, 2 bytes are conventionally employed to store any one Arabic character. According to the present invention, the Arabic characters can be mapped to Latin characters by means of a bijective mapping, for instance by means of the mapping described above with reference to Table 1. The Latin characters can then be represented by 1 byte each according to Unicode's UTF-8 protocol. This results in a reduction of storage space by roughly 50 %. The text file can later be retrieved in reduced form, and the Latin characters can be mapped back to Arabic characters by the inverse mapping of the bijective mapping. Hence, the original text file containing Arabic characters is restored.

In order to further reduce the text size, standard compression schemes such as the zip or gzip format can be run on the converted message. The message can then be stored in compressed form, and the corresponding decompression algorithm can be employed after retrieval of the message and before the message is converted from Latin characters to Arabic characters by means of the inverse of the bijective mapping. Therefore, the physical resources and the cost associated with the storing of the given message is further reduced.

The exemplatory embodiments described above and the figures merely serve to illustrate the present invention, and should not be taken to limit the present invention in any way. Those skilled in the art will readily appreciate that the invention can be practiced in a large number of variations without departing from the underlying principle. The scope of the present invention is limited only by the claims as appended.

## Claims

1. A conversion method for the transfer or storage of encoded information by means of a transfer or storage protocol requiring an encoding with a restricted character set, comprising the step of
mapping a first word with characters from a subset of a first alphabet for which a first transfer or storage protocol requires an n-bit encoding to a second word with characters from a subset of a second alphabet for which a second transfer or storage protocol requires an m-bit encoding by means of a bijective mapping, wherein m is smaller than n.

2. The conversion method according to claim 1, further comprising the step of
sending and/or storing the second word according to the second transfer or storage protocol.

3. The conversion method according to claim 1 or 2, further comprising the step of
reconstructing the first word from the second word by means of the inverse mapping of the bijective mapping.

4. The conversion method according to claim 3, wherein the second word is compressed after the mapping of the first word to the second word and/or decompressed before reconstruction of the first word.

5. The conversion method according to any of the claims 2 to 4, wherein a third word with characters from a third alphabet is transferred and/or stored alongside the second word.

6. A conversion method for the transfer or storage of encoded information by means of a transfer or storage protocol requiring an encoding with a restricted character set, comprising the step of
reconstructing a first word with characters from a subset of a first alphabet for which a first transfer or storage protocol requires an n-bit encoding from a second word with characters from a subset of a second alphabet for which a second transfer or storage protocol requires an m-bit encoding by means of the inverse mapping of a bijective mapping, wherein m is smaller than n.

7. The conversion method according to claim 6, further comprising the step of
receiving and/or retrieving the second word according to the second transfer or storage protocol before reconstruction of the first word.

8. The conversion method according to claim 7, wherein a third word with characters from a third alphabet is received and/or retrieved alongside the second word.

9. The conversion method according to claim 5 or claim 8, wherein the third word is separated from the second word by means of a designated character or signal.

10. The conversion method according to any of the previous claims, wherein the first word and/or the second word and/or the third word are characters.

11. A conversion apparatus for the transfer or storage of encoded information by means of a transfer or storage protocol requiring an encoding with a restricted character set, comprising
a mapping unit, which is configured to map a first word with characters from a subset of a first alphabet for which a first transfer or storage protocol requires an n-bit encoding to a second word with characters from a subset of a second alphabet for which a second transfer or storage protocol requires an m-bit encoding by means of a bijective mapping, wherein m is smaller than n.

12. The conversion apparatus according to claim 11, further comprising
a processing unit, which is connected to the mapping unit and configured to receive the second word from the mapping unit and further configured to transfer and/or store the second word according to the second transfer or storage protocol.

13. The conversion apparatus according to claim 11 or 12, further comprising
a reconstruction unit, which is connected to the processing unit and configured to receive the second word from the processing unit and to reconstruct the first word from the second word.

14. A conversion apparatus for the transfer or storage of encoded information by means of a transfer or storage protocol requiring an encoding with a restricted character set, comprising
a reconstruction unit, which is configured to reconstruct a first word with characters from a subset of a first alphabet for which a first transfer or storage protocol requires an n-bit encoding from a second word with characters from a subset of a second alphabet for which a second transfer or storage protocol requires an m-bit encoding by means of the inverse mapping of a bijective mapping, wherein m is smaller than n.

15. The conversion apparatus according to claim 14, further comprising
a processing unit, which is connected to the reconstruction unit and configured to transfer and/or store the second word according to the second transfer or storage protocol.
